# EUROPEAN PATENT SPECIFICATION

(11) **EP 1 365 076 B1**
(45) Date of publication and mention of the grant of the patent: **14.02.2007**
(21) Application number: 03004527.2
(22) Date of filing: 28.02.2003
(51) Int. Cl.: E02F 9/22, E02F 3/96

(54) **Hydraulic circuit for auxiliary working implements**
Hydraulikkreis für Zusatzarbeitseinrichtungen
Circuit hydraulique pour dispositifs de travail auxiliaires

(30) Priority: 23.05.2002 JP 2002148697
(43) Date of publication of application: 26.11.2003
(73) Proprietor: KOMATSU LTD., Minato-ku, Tokyo 107-8414 (JP)
(72) Inventor: Sugiyama, Kiyoshi, c/o Komatsu Ltd., Komatsui-shi, Ishikawa 923-0392 (JP); Yamamoto, Hiroshi, c/o Komatsu Ltd., Komatsui-shi, Ishikawa 923-0392 (JP); Fukushima, Akira, c/o Komatsu Ltd., Komatsui-shi, Ishikawa 923-0392 (JP)
(74) Representative: Viering, Hans-Martin

(56) References cited:
- EP-A- 0 085 197
- EP-A- 0 849 406
- US-A- 4 548 385
- US-A- 4 755 100
- US-A- 4 949 805
- US-A- 6 112 612
- PATENT ABSTRACTS OF JAPAN vol. 2000, no. 04, 31 August 2000 (2000-08-31) -& JP 2000 008400 A (SHIN CATERPILLAR MITSUBISHI LTD), 11 January 2000 (2000-01-11)

## Description

The invention relates to a hydraulic excavator according to the preamble of claim 1.

In a hydraulic excavator such as a hydraulic shovel or the like, a standard work is mainly constituted by carrying out an excavation of sediment and rock by driving a hydraulic actuator of a standard working implement (bucket), however, the other works than the standard work can be carried out by attaching various auxiliary working implements (attachment such as a breaker device, a coupler device and the like).

Accordingly, in a vehicle using the auxiliary working implement, a main valve for the auxiliary working implement is previously assembled in a main valve for the standard working implement placed in a side of a vehicle body in many cases. Further, since the auxiliary working implement is attached to a leading end portion of an arm by replacing the standard working implement (bucket) by the auxiliary working implement in many cases, a hydraulic pipe for connecting the hydraulic actuator for the auxiliary working implement to the main valve for the auxiliary working implement is previously provided close to the leading end portion of the arm, and rotatable stop valves are provided at two positions comprising opening and closing positions of a terminal end in the pipe. In the case that the auxiliary working implement is not attached, an oil is shut off by closing the stop valve.

Further, in the case that the work by the auxiliary working implement is carried out, the working implement (for example, the bucket) under attachment is first taken out from the arm by taking out a connection pin, thereafter, the auxiliary working implement is attached to the leading end portion of the arm by the connection pin, next, the stop valve and the hydraulic actuator for the auxiliary working implement are connected by the connection pipe, and then, the stop valve is set to the opening position. Accordingly, since the main valve for the auxiliary working implement in the side of the vehicle body is connected to the hydraulic actuator for the auxiliary working implement via the stop valve, the auxiliary working implement can be driven by operating the main valve for the auxiliary working implement.

In the case that the standard working implement or the auxiliary working implement is attached, detached or replaced by attaching or detaching the connection pin in the manner mentioned above, a lot of time is taken for the replacing work, so that it is much required that a hydraulic quick coupler device which is easily replaced for a short time can be used.

However, since the hydraulic circuit (the main valve, the hydraulic pipe and the stop valve) for the auxiliary working implement mentioned above is provided only for one system, that is, only for one actuator, it is impossible to simultaneously operate two or more kinds of hydraulic actuators. Therefore, when the hydraulic quick coupler device mentioned above is attached to the leading end of the arm, two hydraulic circuits for the hydraulic actuator of the coupler device and for the hydraulic actuator of the auxiliary working implement are simultaneously required, however, there is a problem that the coupler device can not be used in the conventional one circuit.

On the other hand, in order to use the coupler device, it is necessary to carry out a modification that one system of hydraulic circuit (the main valve, the hydraulic pipe and the stop valve) for any one of the coupler device and the auxiliary working implement is newly added, so that there is a problem that a lot of time therefor is taken, and a cost is increased.

US-A-4 949 805 discloses a hydraulic excavator comprising a hydraulic circuit for an auxiliary working implement for selectively operating two kinds of auxiliary working implements, said hydraulic circuit comprising a direction switching valve, oil chamber pipes, binary flow path selecting and switching valves, and oil chamber connecting pipes connected to flow paths of the binary flow path selecting and switching valves.

The present invention is made by paying attention to the conventional problems mentioned above, and an object of the present invention is to provide a hydraulic circuit for an auxiliary working implement which can selectively operate two kinds of auxiliary working implements by one system of hydraulic circuit.

According to the invention, this is achieved by a hydraulic excavator according to the features of claim 1. Advantageous further embodiments are described in the subclaims.

In accordance with the present invention, since the binary flow path selecting and switching valves are respectively provided in the terminal ends of the one side oil chamber pipe and the another side oil chamber pipe which respectively connect the one side oil chamber and the another side oil chamber of the hydraulic actuators for two auxiliary working implements to the direction switching valve, and the direction switching valve is connected to the one side oil chamber and the another side oil chamber of the first auxiliary working implement by switching these two binary flow path selecting and switching valves to a side of the one flow path, it is possible to operate the first auxiliary working implement by operating the direction switching valve in this state. In the same manner, when switching the two binary flow path selecting and switching valves to a side of the another flow path, the direction switching valve is connected to the one side oil chamber and the another side oil chamber of the second auxiliary working implement, so that it is possible to operate the second auxiliary working implement by operating the direction switching valve in this state. Accordingly, two kinds of auxiliary working implements can be selectively operated on the basis of one system of hydraulic circuit for the auxiliary working implement (the direction switching valve, the one side oil chamber pipe, the another side oil chamber pipe and the binary flow path selecting and switching valve), by switching the binary flow path selecting and switching valve, and it is possible to construct the hydraulic circuit for the auxiliary working implement simply and by a low cost.

Further, an attaching and detaching operation of the auxiliary working implement such as the breaker device or the like can be easily carried out by setting one of these auxiliary working implements to a coupler device driven by a hydraulic actuator, and it is possible to improve an operability.

In accordance with the present invention, a flow path for returning the oil from the another side oil chamber of the hydraulic actuator to the tank is formed by switching the flow path switching valve provided in the middle of the another side oil chamber pipe, and it is possible to select a flow path passing through the direction switching valve and a flow path not passing therethrough. Accordingly, in the case that there is a risk that a lot of dusts are mixed in the oil returning from the another side oil chamber to the tank, for example, in the breaker operation, it is possible to protect the direction switching valve by selecting the flow path not passing through the direction switching valve. Further, since a filter can be added to this flow path, a reliability of the hydraulic circuit is improved.

In accordance with the present invention, since the one side oil chamber pipe and the another side oil chamber pipe are blocked at the terminal ends by switching and operating the binary flow path selecting and switching valves to the binary flow path disconnection position, the oil does not flow out from the one side oil chamber pipe and the another side oil chamber pipe at a time when none of two kinds of auxiliary working implements are attached and two kinds of auxiliary working implements are simultaneously attached or detached. Accordingly, it is possible to prevent the working implements from being soiled and it is possible to prevent an environment in a working field from being polluted.

In accordance with the present invention, since the coupler device and the breaker device which are operated by the hydraulic actuator are simultaneously attached as two kinds of auxiliary working implements, it is preferable to the hydraulic excavator such as the hydraulic shovel or the like which is frequently worked in a state in which the coupler device and the breaker device operated by the hydraulic actuator are combined. Further, since the coupler device is attached, it is very easy to carry out a replacing operation of the auxiliary working implement such as the breaker device or the like.

In accordance with the present invention, the direction switching valve is previously placed in the side of the vehicle body of the hydraulic excavator, and the one side oil chamber pipe and the another side oil chamber pipe for connecting the hydraulic actuator for the auxiliary working implement to the direction switching valve, and the binary flow path selecting and switching valves which are respectively provided at the terminal ends of the one side oil chamber pipe and the another side oil chamber pipe and carry out the switching operation of the binary flow path or the disconnecting operation of the binary flow path are previously mounted to the arm of the hydraulic excavator. Accordingly, since it is sufficient to connect the one side oil chamber connecting pipe and the another side oil chamber connecting pipe of the auxiliary working implements respectively to two binary flow path selecting and switching valves, at a time of attaching two kinds of auxiliary working implements to the arm or detaching two kinds of auxiliary working implements from the arm, it is not necessary that a new pipe or the like is provided, and it is possible to easily attach the auxiliary working implements to the arm or easily detach the auxiliary working implements from the arm.
Fig. 1 is a hydraulic circuit diagram for an auxiliary working implement having two kinds of auxiliary working implements in accordance with the present invention;
Fig. 2 is an enlarged front elevational view of a binary flow path selecting and switching valve in Fig. 1;
Fig. 3 is a cross sectional view along a line X-X in Fig. 2;
Fig. 4 is an enlarged front elevational view of a flow path switching valve in Fig. 1;
Fig. 5 is a cross sectional view along a line Y-Y in Fig. 4;
Fig. 6 is a view of layout in which the hydraulic circuit shown in Fig. 1 is mounted on a hydraulic excavator;
Fig. 7 is a schematic view of a working implement connecting operation performed by a coupler device shown in Fig. 1;
Fig. 8 is a schematic view of a working implement releasing operation performed by the coupler device shown in Fig. 1; and
Fig. 9 is a schematic view of an operation of a breaker device shown in Fig. 1.

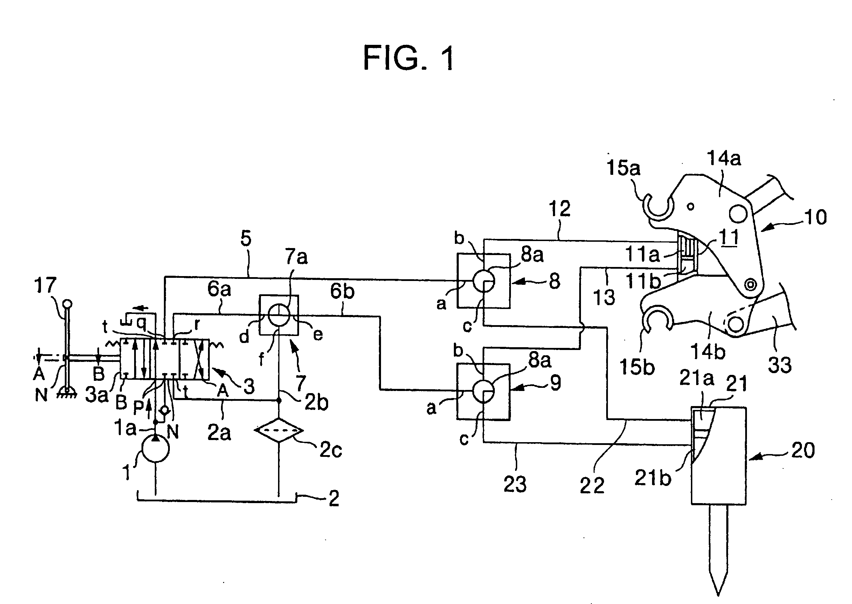

A description will be given below of an embodiment of a hydraulic circuit for an auxiliary working implement in accordance with the present invention with reference to Figs. 1 to 9.

A description will be given of a hydraulic circuit for an auxiliary working implement having two kinds of auxiliary working implements with reference to Fig. 1. Two kinds of auxiliary working implements in accordance with the present embodiment are constituted by a coupler device 10 and a breaker device 20 which are driven by a hydraulic actuator.

The coupler device 10 is structured such that base end portions are rotatably connected to each other, a pair of opening and closing members 14a and 14b having hook portions 15a and 15b capable of engaging with an engagement pin of the auxiliary working implement are provided with respective leading end portions, and a hydraulic cylinder 11 is rotatably mounted between these pair of opening and closing members 14a and 14b. Further, the breaker device 20 is provided with a hydraulic actuator 21 which generates a vibration by a pressure oil, in an inner portion thereof. Each of these two binary flow path selecting and switching valves 8 and 9 is a valve which allows to selectively connect one flow path a to any one of two flow paths b and c or to selectively disconnect from both of them. The flow path b of the binary flow path selecting and switching valve 8 is connected to a head chamber 11a of the hydraulic cylinder 11 via a pipe 12, and the flow path c is connected to a one side (a pressure side) oil chamber 21a of the hydraulic actuator 21 via a pipe 22, respectively. Further, the flow path b of the binary flow path selecting and switching valve 9 is connected to a bottom chamber 11b of the hydraulic cylinder 11 via a pipe 13, and a flow path c is connected to an another side (a drain side) oil chamber 21b of the hydraulic actuator 21 via a pipe 23, respectively. These binary flow path selecting and switching valves 8 and 9 may be parts having the same structure, or parts having different structures, however, different reference numerals are attached in accordance with convenience for description.

Further, the flow path a of the binary flow path selecting and switching valve 8 is connected to a one output port q of a three position direction switching valve 3 via a pipe 5, and the flow path a of the binary flow path selecting and switching valve 9 is connected to an another output port r of the three position direction switching valve 3 sequentially via a pipe 6b, flow paths e and d of the binary flow path switching valve 7 and a pipe 6a.

A flow path f of the flow path switching valve 7 is connected to a tank 2 via a pipe path 2b and a filter 2c.

The hydraulic pump 1 is connected to an input port p of the three position direction switching valve 3 via a pipe path 1a, an output side tank port t is connected to the tank 2, and a return side tank port t is connected to the tank 2 sequentially via the pipe paths 2a and 2b, and the filter 2c, respectively.

When the spool 3a of the three position direction switching valve 3 is at a position A, the input port p and the another output port r are communicated, and the one output port q and the return side tank port t are communicated, respectively, and when it is at a position B, the input port p and the one output port q are communicated, and the another output port r and the return side tank port t are communicated, respectively. Further, at a position N, the input port p and the output side tank port t are communicated, and both of these output ports q and r are disconnected.

An operation lever 17 capable of operating the spool 3a to each of the positions A, B and N is connected to the spool 3a of the three position direction switching valve 3.

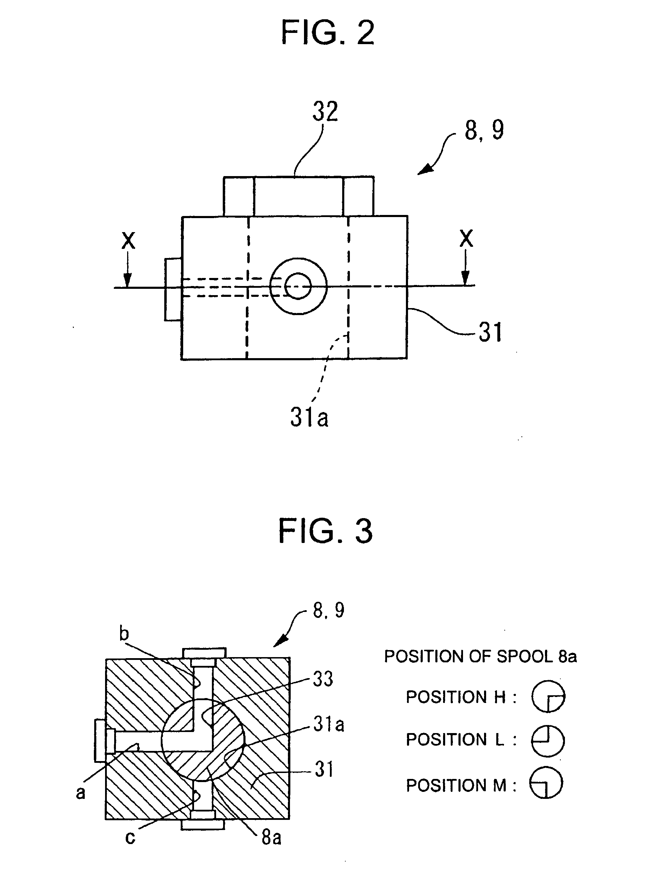

In the present embodiment, the structures of two binary path selecting and switching valves 8 and 9 are the same, and a description will be given of the structure with reference to Figs. 2 and 3. Fig. 2 is a front elevational view of the binary flow path selecting and switching valves 8 and 9, and Fig. 3 is a cross sectional view along a line X-X in Fig. 2.

Each of the binary flow path selecting and switching valves 8 and 9 is provided with a block 31 having a penetrating cylindrical insertion hole 31a, and a cylindrical spool 8a is inserted to the insertion hole 31a. The block 31 has a flow path a which is formed so as to be communicated with the insertion hole 31a from an outer surface toward an axis of the insertion hole 31a, and two flow paths b and c which are communicated with the insertion hole 31a from the outer surface toward the axis of the insertion hole 31a in a direction perpendicular to the flow path a, and are formed at mutually opposing positions. A vertically curved flow path 33 for communicating two flow path ports on an outer peripheral surface is formed in a spool 8a. The flow path 33 and each of the flow paths a, b and c of the block 31 are structured such that the positions in the axial direction of the insertion hole 31a are formed identically, and can be communicated with each other in correspondence to a rotation of the spool 8a. In this case, oil seal portions to which O-rings (not shown) or the like are attached are formed on both end portions of a sliding surface between the insertion hole 31a and an outer peripheral surface of the spool 8a, with respect to these flow paths a, b and c.

Further, a rotation operating portion 32 which is used for rotating the spool 8a is formed at one end portion of the spool 8a in an outer side of the block 31. The rotation operating portion 32 is formed in such a shape that the rotation operating portion 32 is easily operated from an external portion, and in the present embodiment, an outer peripheral surface thereof is formed in a hexagonal nut shape.

When rotating the spool 8a to a position L or a position M shown in Fig. 3, the flow path a and the flow path b are communicated via the flow path 33 of the spool 8a, or the flow path a and the flow path c are communicated via the flow path 33 of the spool 8a, respectively. Further, the flow path a and the flow paths b and c are disconnected at the position H.

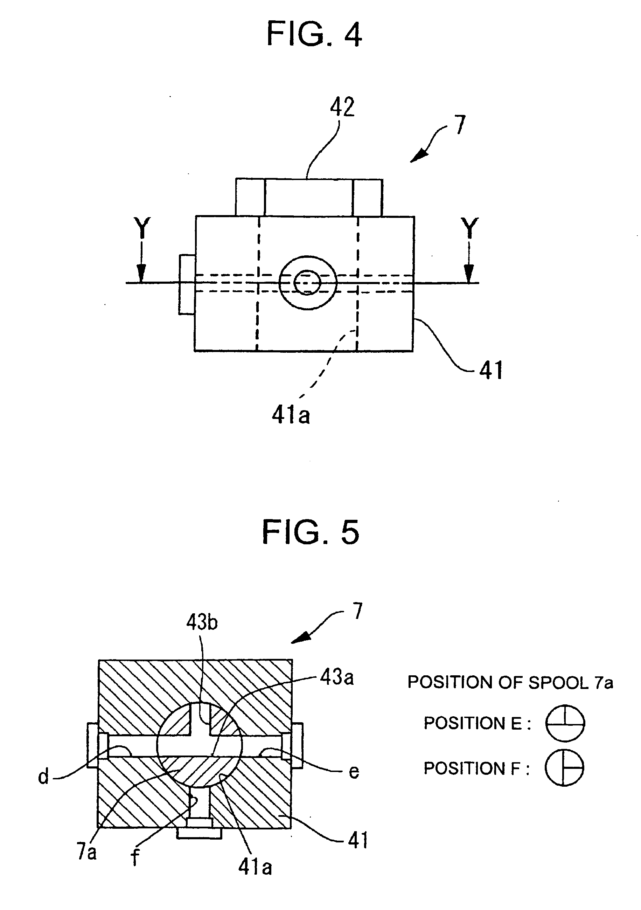

Next, a description will be given of a structure of the flow path switching valve 7 with reference to Figs. 4 and 5. Fig. 4 is a front elevational view of the flow path switching valve 7, and Fig. 5 is a cross sectional view along a line Y-Y in Fig. 4.

The flow path switching valve 7 is provided with a block 41 having a penetrating cylindrical insertion hole 41a, and a cylindrical spool 7a is inserted to the insertion hole 41a. The block 41 has a flow path f which is formed so as to be communicated with the insertion hole 41a from an outer surface toward an axis of the insertion hole 41a, and two flow paths d and e which are communicated with the insertion hole 41a from the outer surface toward the axis of the insertion hole 41a in a direction perpendicular to the flow path f, and are formed at mutually opposing positions. A flow path 43a for communicating two flow path ports existing at phase positions by 180 degrees on an outer peripheral surface, and a flow path 43b communicating the two flow path ports on the outer peripheral surface with a flow path port existing at a phase position by 90 degrees and being orthogonal to the flow path 43a are formed in the spool 7a. The flow paths 43a and 43b, and each of the flow paths d, e and f of the block 41 are structured such that the positions in the axial direction of the insertion hole 41a are formed identically, and can be communicated with each other in correspondence to a rotation of the spool 7a. In this case, oil seal portions to which O-rings (not shown) or the like are attached are formed on both end portions of a sliding surface between the insertion hole 41a and an outer peripheral surface of the spool 7a, with respect to these flow paths d, e and f.

Further, a rotation operating portion 42 which is used for rotating the spool 7a is formed at one end portion of the spool 7a in an outer side of the block 41. The rotation operating portion 42 is formed in such a shape that the rotation operating portion 42 is easily operated from an external portion, and in the present embodiment, an outer peripheral surface thereof is formed in a hexagonal nut shape.

When the spool 7a exists at a position E shown in Fig. 5, the flow path d and the flow path e are communicated via the flow path 43a of the spool 7a, and when the spool 7a exists at a position F, the flow path e and the flow path f are communicated via the flow paths 43b and 43a of the spool 7a. In this case, the spool 7a is generally set to the position E, and in the case that the auxiliary working implement in which the oil extremely tends to be soiled during the use such as the breaker device 20 or the like is attached, the spool 7a is set to the position F.

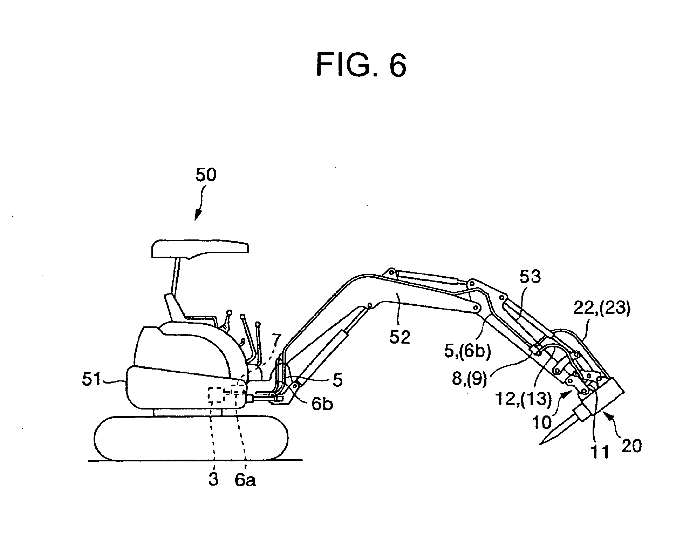

Fig. 6 is a view of layout in which the hydraulic circuit shown in Fig. 1 is mounted on a hydraulic excavator 50.

As shown in Fig. 6, the direction switching valve 3, the pipe 6a and the flow path switching valve 7 are placed in a side of a vehicle body 51 of the hydraulic excavator 50, the pipe 5 and the pipe 6b are provided along a boom 52 and an arm 53 of the hydraulic excavator 50, and the binary flow path selecting and switching valves 8 and 9 respectively connected to terminal ends of the pipe 5 and the pipe 6b are mounted to a leasing end portion (that is, near an attaching portion of the auxiliary working implement) of the arm 53.

The pipe 12 which is attached to the leading end portion of the arm 53 as mentioned above and connected to a head chamber of the hydraulic cylinder 11 in the coupler device 10 connecting to the breaker device 20, and the pipe 22 connected to the one side oil chamber of the breaker device 20 are connected to the binary flow path selecting and switching valve 8, respectively, and the pipe 13 connected to a bottom chamber of the hydraulic cylinder 10 of the coupler device 10, and the pipe 23 connected to the another side oil chamber of the breaker device 20 are connected to the binary flow path selecting and switching valve 9, respectively.

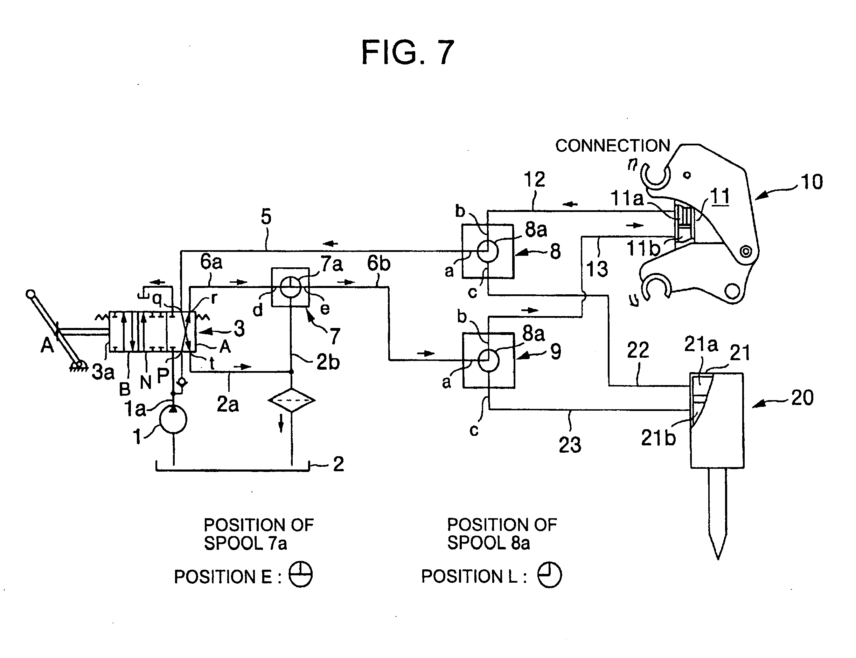

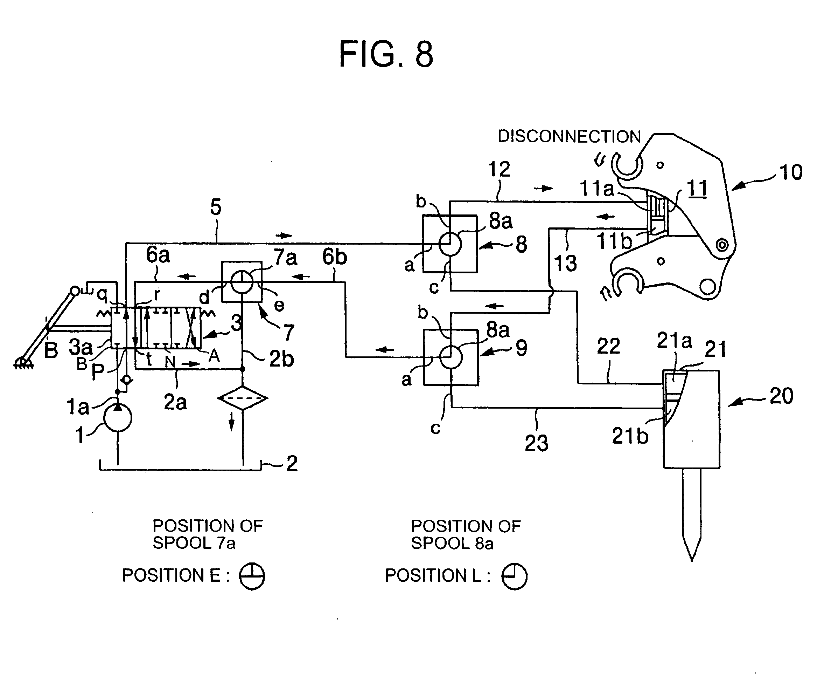

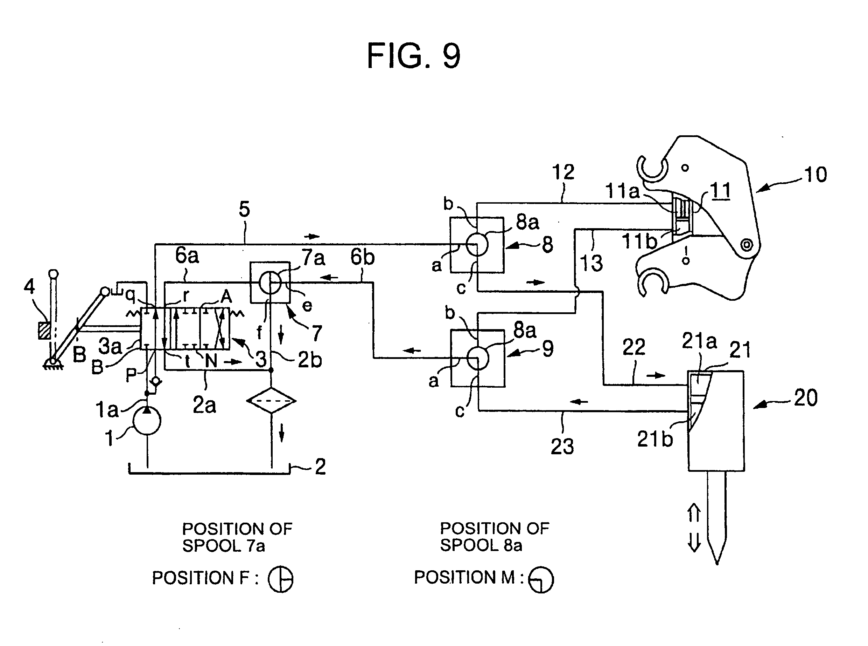

Next, a description will be given of an operation of the present embodiment with reference to Figs. 7 to 9. Figs. 7 and 8 are schematic views of a connecting operation and a disconnecting operation of the working implement performed by the coupler device 10. Fig. 9 is a view showing an operation of the breaker device.

First, a description will be given of a connecting and disconnecting operation of the working implement performed by the coupler device 10 with reference to Figs. 7 and 8. As shown in Fig. 7, first, in a state in which the spool 7a of the flow path switching valve 7 is set to the position E, each of the spools 8a of the binary flow path selecting and switching valves 8 and 9 are switched from the position H to the position L, and next the spool 3a of the direction switching valve 3 is switched from the position N to the position A by the operating lever 17. Then, the input port p of the direction switching valve 3 is connected to the bottom chamber 11b of the hydraulic cylinder 11 of the coupler device 10 through the another output port r of the direction switching valve 3, the pipe 6a, the flow paths d and e of the flow path switching valve 7, the pipe 6b, the flow paths a and b of the binary flow path selecting and switching valve 9, and the pipe 13 of the coupler device 10. At the same time, the head chamber 11a of the hydraulic cylinder 11 is connected to the one output port q of the direction switching valve 3 and the return side tank port t through the pipe 12, the flow paths b and a of the binary flow path selecting and switching valve 8 and the pipe 5. Accordingly, since the oil discharged from the hydraulic pump 1 comes into the bottom chamber 11b of the hydraulic cylinder 11, and the oil in the head chamber 11a returns to the tank 2, the hydraulic cylinder 11 is extended, and the coupler device 10 connects the working implement.

In the same manner, as shown in Fig. 8, the spool 3a of the direction switching valve 3 is switched from the position N to the position B. Accordingly, the input port p of the direction switching valve 3 is connected to the head chamber 11a of the hydraulic cylinder 11 in the coupler device 10 through the one output port q, the pipe 5, the flow paths a and b of the binary flow path selecting and switching valve 8 and the pipe 12 of the coupler device 10. At the same time, the bottom chamber 11b of the hydraulic cylinder 11 is connected to the another output port r of the direction switching valve 3 and the return side tank port t through the pipe 13, the flow paths b and a of the binary flow path selecting and switching valve 9, the pipe 6b, the flow paths e and d of the flow path switching valve 7 and the pipe 6a. Accordingly, since the oil discharged from the hydraulic pump 1 comes into the head chamber 11a of the hydraulic cylinder 11, and the oil in the bottom chamber 11b returns to the tank 2, the hydraulic cylinder 11 is compressed, and the coupler device 10 carries out the releasing operation of the working implement.

In this case, when the spools 8a and 8a of the binary flow path selecting and switching valves 8 and 9 exist at the position L, the flow path c is disconnected, so that the oil chambers 21a and 21b of the hydraulic actuator 21 in the breaker device 20 are blocked. Accordingly, the breaker device 20 is not erroneously operated during the connecting or the disconnecting operation of the coupler device 10.

Next, a description will be given of an operation of the breaker device 20 with reference to Fig. 9.

As shown in Fig. 9, first, the spool 7a of the flow path switching valve 7 is switched from the position E to the position F, next, the spools 8a and 8a of the binary flow path selecting and switching valves 8a and 9 are switched to the position M, and the spool 3a of the direction switching valve 3 is switched from the position N to the position B. Then, the input port p of the direction switching valve 3 is connected to the one side oil chamber 21a of the hydraulic actuator 21 in the breaker device 20 through the one output port q of the direction switching valve 3, the pipe 5, the flow paths a and c of the binary flow path selecting and switching valve 8 and the pipe 22 connected to the one side oil chamber of the breaker device 20. At the same time, the another side oil chamber 21b of the hydraulic actuator 21 is connected to the flow paths e and f of the flow path switching valve 7 through the pipe 23, the flow paths c and a of the binary flow path selecting and switching valve 9, and the pipe 6b. Accordingly, the oil discharged from the hydraulic pump 1 comes into the one side (pressure side) oil chamber 21a of the hydraulic actuator 21 in the breaker device 20, and the oil in the another side oil chamber 21b returns to the tank 2 via the pipe path 2b without passing through the direction switching valve 3, so that the breaker device 20 is operated.

In this case, since the hydraulic actuator 21 of the breaker device 20 is operated in one direction, the lock 4 is applied so as to prevent the direction switching valve 3 from being operated from the position N toward the position A, during the operation of the breaker device 20.

Further, since the flow path b is disconnected at a time when the spools 8a of the binary flow path selecting and switching valves 8 and 9 exist at the position M, the head chamber 11a and the bottom chamber 11b of the hydraulic cylinder 11 in the coupler device 10 are blocked. Accordingly, the coupler device 10 is not erroneously operated during the operation of the breaker device 20.

Next, a description will be given of an effect of the present embodiment with reference to Figs. 1 to 9.

In the case that the coupler device 10 is used, in a state in which the flow path switching valve 7 is set to the position E, the binary flow path selecting and switching valves 8 and 9 are switched from the position H to the position L, and next, the direction switching valve 3 is switched from the position N to the position A, whereby the coupler device 10 carries out the connecting operation. Further, the coupler device 10 carries out the disconnecting operation by switching the direction switching valve 3 from the position N to the position B.

Further, in the case that the breaker device 20 is used, the flow path switching valve 7 is switched from the position E to the position F, next, the binary flow path selecting and switching valves 8 and 9 are switched from the position H to the position M, and the direction switching valve 3 is switched from the position N to the position B, whereby the breaker device 20 is operated.

As mentioned above, since it is possible to selectively operate the hydraulic actuators for two working implements constituted by the coupler device 10 and the breaker device 20 on the basis of one system of hydraulic circuit (the direction switching valve 3, the pipe 5, the pipes 6a and 6b, the flow path switching valve 7 and the binary flow path selecting and switching valves 8 and 9) for the auxiliary working implement by switching the binary flow path selecting and switching valves 8 and 9, it is possible to make the structure of the hydraulic circuit for the auxiliary working implement simple, and it is possible to make the cost inexpensive.

Further, since the pipe 5 and the pipe 6b are blocked at the terminal end by switching the binary flow path selecting and switching valves 8 and 9 to the position H, the oil does not flow out from the pipe 5 and the pipe 6 at a time when the coupler device 10 and the breaker device 20 is not attached and the attaching and detaching operation is carried out, and it is possible to prevent the machine from being soiled and prevent an environmental pollution, so that this is convenient.

Since the coupler device 10 and the breaker device 20 which are operated by the hydraulic actuator are simultaneously attached, the structure is preferable for the hydraulic excavator 50 frequently worked in a state in which the coupler device 10 and the breaker device 20 are combined. Since the coupler device 10 can be used, it is possible to very easily carry out the replacing operation between the breaker device 20, and the standard working implement (the bucket or the like) and the other auxiliary working implements.

Further, in the case that the breaker device 20 is operated, since the pressure oil of the another side oil chamber 21b of the hydraulic actuator 21 in the breaker device 20 returns to the tank 2 via the pipe 2b without passing through the direction switching valve 3 by switching the flow path switching valve 7 to the position F, it is possible to protect the direction switching valve 3 even in the case that there is a risk that a lot of dusts generated by the breaker operation are mixed into the pressure oil. Further, since the filter 2c can be additionally provided in the pipe path 2b, a reliability of the hydraulic circuit is improved.

Further, since the direction switching valve 3, the pipe 6a and the flow path switching valve 7 are previously placed in the side of the vehicle body 51 of the hydraulic excavator 50, and the pipe 5, the pipe 6b and the binary flow path selecting and switching valves 8 and 9 are previously placed in the arm 53 of the hydraulic excavator 50, it is sufficient to respectively connect the pipe 12 and the pipe 13 of the coupler device 10 to the flow paths b of the binary flow path selecting and switching valves 8 and 9, and respectively connect the pipe 22 and the pipe 23 of the breaker device 20 to the flow paths c of the binary flow path selecting and switching valves 8 and 9, at a time of attaching the coupler device 10 and the breaker device 20 to the arm 53. Since no new pipe to the side of the vehicle side is required as mentioned above, it is possible to easily attach the auxiliary working implement such as the coupler device 10, the breaker device 20 and the like to the arm 53 and detach the auxiliary working implement from the arm 53.

Since two flow paths b and c respectively connected to two kinds of auxiliary working implements in the binary flow path selecting and switching valves 8 and 9 are formed in the direction toward the axis of the spool 8a and at the mutually opposing positions, and one flow path a connected to the direction switching valve 3 is formed in the direction orthogonal to these two flow paths b and c and the position at which the phase is displaced at 90 degrees, it is possible to select and switch between two flow paths if the flow path 33 in the side of the spool 8a is formed in a perpendicularly curved shape, and it is possible to easily form the flow path in the side of the spool 8a.

In this case, in the present embodiment, the flow path 33 of the spool 8a in each of the binary flow path selecting and switching valves 8 and 9 is formed in the perpendicularly curved shape, however, the present invention is not limited to this, and it is possible to form in a shape in correspondence to the position and the direction of the flow paths a, b and c in the side of the block 31 of the binary flow path selecting and switching valves 8 and 9.

Further, the binary flow path selecting and switching valves 8 and 9 are shown by the embodiment which is constructed by the different blocks 31, however, the structure may be made such that one (common) spool is inserted to one block, and two sets of flow paths (for the one side oil chambers 11a and 21a and for the another side oil chambers 11b and 21b) which are apart from each other in the axial direction are formed in the spool.

Further, the description is given of the embodiment in which the position of the direction switching valve 3 is switched by the operating lever 17, however, the structure is not limited to this, for example, the position may be operated by a pedal.

Further, the auxiliary working implement is shown by the embodiment in which the coupler device 10 and the breaker device 20 are attached, however, the structure is not limited, for example, the auxiliary working implement may be, for example, a crusher device, a drill device or the like which is operated by the hydraulic actuator.

As described above, there can be obtained the following effect of the present invention.

Since it is possible to selectively operated two kinds of auxiliary working implements on the basis of one system of hydraulic circuit for the auxiliary working implement by switching the binary flow path selecting and switching valve, it is possible to construct the hydraulic circuit for the auxiliary working implement simply and by a low cost.

Further, since the one side oil chamber pipe and the another side oil chamber pipe are blocked at the terminal ends by switching the binary flow path selecting and switching valve to the binary flow path disconnecting position, the working fluid does not flow out from the one side oil chamber pipe and the another side oil chamber pipe in the case that both of two kinds of auxiliary working implements are not attached and the attaching and detaching operation is carried out, so that this is convenient.

Further, since it is possible to simultaneously attach two kinds of auxiliary working implements which are operated by the hydraulic actuators, it is possible to attach the coupler device as one kind, so that it is possible to simultaneously attach the other auxiliary working implements such as the breaker device or the like easily by using the coupler device. Therefore, in the hydraulic excavator which is operated in the state that the auxiliary working implement such as the breaker device or the like is attached thereto, an operability of attaching and detaching the working implement is very good.

Further, since it is possible to select the flow path which can return the oil returning from the hydraulic actuator of the auxiliary working implement to the tank without passing through the direction switching valve, by switching the flow path switching valve, the direction switching valve can be protected in the case that there is a risk that a lot of dusts are mixed in the oil returning from the auxiliary working implement to the tank, for example, in the breaker operation, and since the filter can be additionally provided in the flow path of the returning oil, a reliability of the hydraulic circuit is improved.

Further, since the direction switching valve is previously placed in the side of the vehicle body of the hydraulic excavator, and the pipes connecting the hydraulic actuator for the auxiliary working implement to the direction switching valve, and the binary flow path selecting and switching valves respectively provided in the terminal ends of the pipes and carrying out the binary flow path switching operation and the binary flow path disconnecting operation are previously placed in the arm of the hydraulic excavator, it is sufficient to connect the one side oil chamber connecting pipe and the another side oil chamber connecting pipe in two kinds of auxiliary working implements to the binary flow path selecting and switching valve, at a time when two kinds of auxiliary working implements are attached to the arm and detached from the arm. Accordingly, it is possible to easily attach two kinds of auxiliary working implements to the arm and detach two kinds of auxiliary working implements from the arm.

## Claims

1. A hydraulic excavator comprising a hydraulic circuit for an auxiliary working implement for selectively operating two kinds of auxiliary working implements, said hydraulic circuit comprising:
a direction switching valve (3) having a position for selectively connecting one side oil chamber (11a, 21a) and another side oil chamber (11b, 21b) of a hydraulic actuator (11, 21) for the auxiliary working implement to a hydraulic pump (1) and a tank (2), and a neutral position for shutting off the connection;
a one side oil chamber pipe (5) and another side oil chamber pipe (6a, 6b) respectively connecting the one side oil chamber (11a, 21a) and the other side oil chamber (11b, 21b) of said hydraulic actuator (11, 21) for the auxiliary working implement to the direction switching valve (3); and
two binary flow path selecting and switching valves (8, 9) respectively provided in terminal ends of the one side oil chamber pipe (5) and the other side oil chamber pipe (6a, 6b),
wherein a one side oil chamber connecting pipe (12) of a first auxiliary working implement (10) is connected to one flow path (b) of the binary flow path selecting and switching valve (8) of this one side oil chamber pipe (5) and a one side oil chamber connecting pipe (22) of a second auxiliary working implement (20) is connected to another flow path (c), respectively, and
wherein another side oil chamber connecting pipe (13) of the first auxiliary working implement (10) is connected to one flow path (b) of the binary flow path selecting and switching valve (9) of this other side oil chamber pipe (6a, 6b) and another side oil chamber connecting pipe (23) of the second auxiliary working implement (20) is connected to another flow path (c), respectively,
**characterized in that** said other side oil chamber pipe (6a, 6b) is provided with a flow path switching valve (7) which allows to switch a connection from a connection between the other side oil chamber (11b, 21b) of said hydraulic actuator (11, 21) and a tank port (t) of said direction switching valve (3) to a connection between said other side oil chamber (11b, 21b) and a tank (2), in the middle of said pipe.

2. The hydraulic excavator according to claim 1, wherein said two binary flow path selecting and switching valves (8, 9) further have disconnection positions for said binary flow paths (b, c).

3. The hydraulic excavator according to claim 1 or 2, wherein said two kinds of auxiliary working implements are constituted by a coupler device (10) as the first auxiliary working implement and a breaker device (20) as the second auxiliary working implement which are operated by the hydraulic actuator.

4. The hydraulic excavator according to claim 2 or 3,
wherein said direction switching valve (3) is placed in a side of a vehicle body (51) in the hydraulic excavator (50), and
wherein the one side oil chamber pipe (5) and the other side oil chamber pipe (6a, 6b), said binary flow path selecting and switching valves (8, 9), and the one side oil chamber connecting pipe (12, 22) and the other side oil chamber connecting pipe (13, 23) of said two kinds of auxiliary working implements (10, 20) each are attached to an arm (53) of the hydraulic excavator (50).

## Patentansprüche

1. Hydraulikbagger mit einem Hydraulikkreis für ein Zusatzarbeitsgerät zum wahlweisen Betreiben zweier Arten von Zusatzarbeitsgeräten, wobei der Hydraulikkreis aufweist:
ein Wegeventil (3) mit einer Position zum wahlweisen Verbinden einer einerseitigen Ölkammer (11a, 21a) und einer andersseitigen Ölkammer (11b, 21b) einer hydraulischen Betätigungseinrichtung (11, 21) für das Zusatzarbeitsgerät mit einer Hydraulikpumpe (1) und einem Behälter (2), und einer neutralen Position zum Trennen der Verbindung;
ein einerseitiges Ölkammerrohr (5) und ein andersseitiges Ölkammerrohr (6a, 6b), welche die einerseitige Ölkammer (11a, 21a) bzw. die andersseitige Ölkammer (11b, 21b) der hydraulischen Betätigungseinrichtung (11, 21) für das Zusatzarbeitsgerät mit dem Wegeventil (3) verbinden; und
zwei Binärströmungspfad-Auswahl- und Schaltventile (8, 9), die in Anschlussenden des einerseitigen Ölkammerrohres (5) bzw. des andersseitigen Ölkammerrohres (6a, 6b) vorgesehen sind,
wobei ein einerseitiges Ölkammerverbindungsrohr (12) eines ersten Zusatzarbeitsgerätes (10) mit einem Strömungspfad (b) des Binärströmungspfad-Auswahl- und Schaltventils (8) dieses einerseitigen Ölkammerrohres (5) verbunden ist und ein einerseitiges Ölkammerverbindungsrohr (22) eines zweiten Zusatzarbeitsgerätes (20) mit einem anderen Strömungspfad (c) verbunden ist, und
wobei ein andersseitiges Ölkammerverbindungsrohr (13) des ersten Zusatzarbeitsgerätes (10) mit einem Strömungspfad (b) des Binärströmungspfad-Auswahl- und Schaltventils (9) dieses andersseitigen Ölkammerrohres (6a, 6b) verbunden ist und ein andersseitiges Ölkammerverbindungsrohr (23) des zweiten Zusatzarbeitsgerätes (20) mit einem anderen Strömungspfad (c) verbunden ist,
**dadurch gekennzeichnet, dass** das andersseitige Ölkammerrohr (6a, 6b) mit einem Strömungspfadschaltventil (7) versehen ist, welches ermöglicht, eine Verbindung von einer Verbindung zwischen der andersseitigen Ölkammer (11b, 21b) der hydraulischen Betätigungseinrichtung (11, 21) und einer Behälteröffnung (t) des Wegeventils (3) zu einer Verbindung zwischen der andersseitigen Ölkammer (11b, 21b) und einem Behälter (2) in der Mitte des Rohres zu schalten.

2. Hydraulikbagger nach Anspruch 1, wobei die beiden Binärströmungspfad-Auswahl- und Schaltventile (8, 9) ferner Trennpositionen für die Binärströmungspfade (b, c) aufweisen.

3. Hydraulikbagger nach Anspruch 1 oder 2, wobei die beiden Arten von Zusatzarbeitsgeräten von einer Kupplungsvorrichtung (10) als das erste Zusatzarbeitsgerät und einer Brechervorrichtung (20) als das zweite Zusatzarbeitsgerät gebildet werden, welche von der hydraulischen Betätigungseinrichtung betrieben werden.

4. Hydraulikbagger nach Anspruch 2 oder 3,
wobei das Wegeventil (3) an einer Seite einer Fahrzeugkarosserie (51) in dem Hydraulikbagger (50) platziert ist, und
wobei das einerseitige Ölkammerrohr (5) und das andersseitige Ölkammerrohr (6a, 6b), die Binärströmungspfad-Auswahl- und Schaltventile (8, 9), und das einerseitige Ölkammerverbindungsrohr (12, 22) und das andersseitige Ölkammerverbindungsrohr (13, 23) der beiden Arten von Zusatzarbeitsgeräten (10, 20) jeweils an einem Arm (53) des Hydraulikbaggers (50) angebracht sind.

## Revendications

1. Une excavatrice hydraulique comprenant un circuit hydraulique pour un outil de travail auxiliaire, pour exploiter sélectivement deux types d'outils de travail auxiliaires, ledit circuit hydraulique comprenant:
- une valve de commutation directionnelle (3) ayant une position pour relier sélectivement une chambre à huile (11a, 21a) d'un côté et une chambre à huile (11b, 21b) d'un autre côté d'un actionneur hydraulique (11, 21) pour l'outil de travail auxiliaire à une pompe hydraulique (1) et à un réservoir (2), et une position neutre pour obturer la liaison;
- un tube (5) de chambre à huile d'un côté et un tube (6a, 6b) de chambre à huile d'un autre côté, connectant respectivement la chambre à huile (11a, 21a) d'un côté et la chambre à huile (11b, 21 b) de l'autre côté dudit actionneur hydraulique (11, 21) pour l'outil de travail auxiliaire à la valve de commutation directionnelle (3); et
- deux valves (8, 9) de sélection et de commutation de chemin d'écoulement binaire, prévues respectivement dans des extrémités terminales du tube (5) de chambre à huile d'un côté et du tube (6a, 6b) de chambre à huile de l'autre côté
dans laquelle un tube de liaison (12) de chambre à huile d'un côté d'un premier outil de travail auxiliaire (10) est connecté respectivement à un chemin d'écoulement (b) de la valve (8) de sélection et de commutation de chemin d'écoulement binaire de ce tube (5) de chambre à huile d'un côté, et un tube (22) de liaison de chambre à huile d'un autre côté d'un second outil de travail auxiliaire (20) est connecté à un autre chemin d'écoulement (c), et
dans laquelle un tube (13) de liaison de chambre à huile d'un autre côté du premier outil de travail auxiliaire (10) est connecté à un chemin d'écoulement (b) de la valve binaire (9) de sélection et de commutation de chemin d'écoulement de ce tube (6a, 6b) de chambre à huile de l'autre côté et d'un tube de liaison de chambre à huile (23) de l'autre côté du deuxième outil de travail auxiliaire (20) est connecté à un autre chemin d'écoulement (c), respectivement,
**caractérisée en ce que** ledit tube (6a, 6b) de chambre à huile de l'autre côté est muni d'une valve (7) de commutation de chemin d'écoulement permettant de commuter une liaison, d'une liaison entre la chambre à huile (11b, 21b) de l'autre côté dudit actionneur hydraulique (11, 21) et un orifice de réservoir (t) de ladite valve directionnelle de commutation (3), à une liaison entre ladite chambre à huile (11b, 21b) de l'autre côté et un réservoir (2), au centre dudit tube.

2. L'excavatrice hydraulique selon la revendication 1, dans laquelle lesdites deux valves binaires (8, 9) de sélection et de commutation de chemin d'écoulement ont en outre des positions de suppression de liaison pour lesdits chemins d'écoulement binaires (b, c).

3. L'excavatrice hydraulique selon la revendication 1 ou 2, dans laquelle lesdits deux types d'outils de travail auxiliaires sont constitués par un organe de couplage (10), en tant que premier outil de travail auxiliaire, et par un organe interrupteur (20), en tant que deuxième outil de travail auxiliaire, exploités par l'actionneur hydraulique.

4. L'excavatrice hydraulique selon la revendication 2 ou 3, dans laquelle ladite valve de commutation directionnelle (3) est placée d'un côté d'une caisse de véhicule (51) dans l'excavatrice hydraulique (50), et dans laquelle le tube (5) de chambre à huile d'un côté, et le tube (6a, 6b) de chambre à huile de l'autre côté, lesdites valves (8, 9) de sélection et de commutation de chemin d'écoulement binaire, et le tube (12, 22) de liaison de chambre à huile d'un côté, et le tube (13, 23) de liaison de chambre à huile de l'autre côté desdits deux types d'outils de travail auxiliaires (10, 20), sont chacun fixés à un bras (53) de l'excavatrice hydraulique (50).
